# EUROPÄISCHE PATENTSCHRIFT

(11) **EP 0 798 238 B1**
(45) Veröffentlichungstag und Bekanntmachung des Hinweises auf die Patenterteilung: **30.06.2004**
(21) Anmeldenummer: 97105026.5
(22) Anmeldetag: 25.03.1997
(51) Int. Cl.: B65G 1/10

(54) **Lagersystem für Langgutpaletten**
Storage system for pallets for long articles
Système d'entreposage pour palettes pour objets longs

(30) Priorität: 25.03.1996 DE 29605501 U
(43) Veröffentlichungstag der Anmeldung: 01.10.1997
(73) Patentinhaber: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Reichel, Wolfgang, Dipl.-Ing.

(56) Entgegenhaltungen:
- DE-A- 3 438 905
- DE-B- 1 232 884
- FR-A- 2 116 207
- FR-A- 2 238 650

## Beschreibung

Die Erfindung betrifft ein Lagersystem für Langgutpaletten mit zwei oder mehr Palettenmagazinen, in denen jeweils mindestens zwei Paletten parallel übereinander absetzbar sind und mit einer Beschickungseinrichtung zum Anheben und Absenken der Paletten und deren horizontaler Bewegung quer zu ihrer Längsrichtung, wobei die Beschickungseinrichtung als quer zur Längsrichtung der Langgutpaletten horizontal verfahrbare Portal-Beschickungseinrichtung ausgebildet ist, deren Stützen mit Hilfe einer Antriebsvorrichtung an den Stirnseiten der Langgutpaletten vorbei verfahrbar sind und bei der die Palettenmagazine quer zur Längsrichtung der Langgutpaletten verfahrbar ausgebildet sind.

Langgutpaletten oder Langgutkassetten werden beispielsweise dazu verwendet, Fensterprofile aus PVC oder Aluminium zu speichern. Andere zu speichernde Langgüter sind Stabprofile.

Bei bekannten Lagersystemen dieser Art sind zwei oder mehr Palettenmagazine feststehend und jeweils mit einem solchen Abstand voneinander angeordnet, daß die Beschickungseinrichtung, die bei diesen bekannten Lagersystemen ein Seitenhubstapler ist, zwischen die Palettenmagazinen fahren und dabei eine aus einem Magazinfach entnommene Langgutpalette transportieren kann. Die Langgutpaletten oder auch -kassetten sind in den Palettenmagazinen übereinander und nebeneinander absetzbar und werden beim Entnehmen mit Hilfe des Seitenhubstaplers an ihrem Speicherplatz angehoben, anschließend horizontal quer zu ihrer Längsrichtung versetzt, so daß sie dann aus dem Gang zwischen den Palettenmagazinen entnehmbar sind. Für diese Lagersysteme ist verhältnismäßig viel Platz erforderlich, da die Seitenhubstapler zum Erreichen aller Magazinplätze zwischen jeweils zwei Palettenmagazinen einen Beschickungsgang aufweisen müssen, der die Breite des beladenen Seitenhubstaplers aufweist.

Es gibt darüber hinaus auch Paternoster-Langgutlagersysteme, bei denen die Langgutpaletten an einer Umlaufbewegungsvorrichtung angeordnet sind und zur Entnahme zu einer Umsetzstelle bewegbar sind. An dieser Umsetzstelle sind auch entsprechend Langgutpaletten in freie Speicherplätze der Umlaufbewegungsvorrichtung einlagerbar. Wenn Lagerbedarf für viele Langgutpaletten vorliegt, müßten die Umlaufbewegungsvorrichtungen sehr groß ausgebildet sein, und sie sind damit aufwendig und/oder es müssen mehrere Umlaufbewegungsvorrichtungen vorgesehen sein mit entsprechenden Transportvorrichtungen von den Umsetzstellen der einzelnen Umlaufbewegungsvorrichtungen zu einer zentralen Abgabe- und Aufnahmestelle.

Derartige Umlaufbewegungsvorrichtungen sind technisch aufwendig, und zwar insbesondere wegen der für den Umlauf benötigten Einrichtungen.

Es ist andererseits aus der FR 2238650 A bereits ein Lagersystem für Langgutpaletten der eingangs erwähnten Art bekannt mit zwei oder mehr Palettenmagazinen, wobei die Beschickungseinrichtung auch als quer zur Längsrichtung der Langgutpaletten horizontal verfahrbare Portal-Beschickungseinrichtung ausgebildet ist und parallel zur Längsseite der Langgutpaletten angeordnete Greifer nach Art eines Gabelstaplers aufweist, die zwischen eine waagerechten Eingriffsstellung und einer gekippten Verfahrstellung schwenkbar sind. Die Greifer sind höhenverstellbar, und wenn sich ihre Gabelzinken in der waagerechten Stellung befinden, können sie unter eine ausgebildete Langgutpalette greifen und diese anheben und versetzen. Bei diesem bekannten Lagersystem sind die Palettenmagazine auch quer zur Längsrichtung der Langgutpaletten verfahrbar ausgebildet, jedoch ist die Beschickungsvorrichtung verhältnismäßig kompliziert aufgebaut und nur durch mehrere Verfahrschritte vor das jeweilige Palettenmagazin verfahrbar. Dabei werden die höhenverstellbaren Greifer über das oder die Palettenmagazine hinweg bewegt. Dies führt bei einem bestimmten Lagervolumen zu einer Vergrößerung der Bauhöhe.

Der Erfindung liegt die Aufgabe zugrunde, ein Lagersystem der eingangs erwähnten Art zu schaffen, da es mit möglichst wenig Bauteilen und bei geringem Platzaufwand eine schnelle Erreichbarkeit all ihrer Langgutpaletten gewährleistet und gemäß einer Weiterbildung eine Ausgabe an verschiedenen wählbaren Ausgabestellen ermöglicht.

Diese Aufgabe wird durch die Merkmale des kennzeichnenden Teils des Anspruchs 1 gelöst.

Die Portal-Beschickungseinrichtung mit den an den Stützenhöhen verstellbaren Tragteilen ermöglicht es einerseits, daß die Breite des Beschickungsganges nicht größer sein muß als die Breite einer Langgutpalette. Die an den Stützen vorgesehenen höhenverstellbaren Tragteile können von einem Beschickungsgang zum nächsten bewegt werden ohne über eine oder mehrere Palettenmagazine hinweggehoben zu werden. Vorteil des erfindungsgemäßen Lagersystems ist es insbesondere, daß jede Langgutpalette mit einem Minimum an Verfahrschritten erreicht und aus dem Lagersystem herausgeholt und auch in einfacher Weise eingelagert werden kann.

Bei einem Lagersystem nach Anspruch 2 wird der Antrieb zum Verfahren der Portal-Beschickungseinrichtung auch zum Verfahren der einzelnen Palettenmagazine verwendet, um je nach Bedarf den gerade benötigten Beschickungsgang zu schaffen. Die Palettenmagazine werden dabei in einfachster Weise mit Hilfe der verfahrbaren Stützen der Portal-Beschickungseinrichtung verfahren, die höhenverstellbaren ausfahrbaren Tragteile sind in der Höhe synchron miteinander bewegbar und ermöglichen damit eine absolut sichere Bewegung der zu versetzenden Langgutpaletten.

Vorteilhafte Weiterbildungen sind durch die weiteren Unteransprüche gekennzeichnet.

Vorzugsweise sind die bewegbare Palettenmagazine aneinander kuppelbar. Besonders zweckmäßig ist die Anordnung dann, wenn die Kupplungseinrichtungen lediglich aus Kupplungsklinken und -stiften bestehen. Diese können vorzugsweise mit Hilfe verschiebbarer Hebeteile entkuppelt werden, die in ihrem Aufbau und ihrer Wirkungsweise äußerst einfach sind. Diese Hebeteile werden vorzugsweise mit Hilfe des Hebe- und Senkantriebs der Portal-Beschickungseinrichtung betätigt.

Wenn zu beiden Seiten des Lagersystems in Richtung quer zur Laufrichtung der Fahrgestelle Förderbahnen vorgesehen sind, können die eingelagerten Langgutpaletten in einfacher Weise an verschiedene Ausgabestellen am Ende der Förderbahnen befördert werden.

Die Erfindung wird nachstehend anhand der Zeichnungen beispielshalber näher erläutert. Es zeigen:
Fig. 1 ein Lagersystem nach einer Ausführungsform der Erfindung mit verfahrbaren Palettenmagazinen und einer verfahrbaren Portal-Beschickungseinrichtung, mit deren Hilfe die Palettenmagazine entkuppelbar und verfahrbar sind, Fig. 2 das Lagersystem nach Fig. 1, bei dem das abgekuppelte Palettenmagazin zur Öffnung eines neuen Arbeitsganges gerade verfahren wird,
Fig. 3 das Lagersystem nach Fig. 1, bei dem das abgekuppelte Palettenmagazin an das gegenüberliegende Palettenmagazin herangeschoben und an dieses angekuppelt ist,
Fig. 4A, C und E einen Schnitt längs der Stirnseite durch ein Fahrgestell eines Palettenmagazins, das nach den Figuren 1 bis 3 verschoben wird,
Fig. 4B, D und F eine Ansicht des untersten Teils eines verfahrbaren Palettenmagazins sowie einer Stütze der Portal-Beschickungseinrichtung, wobei unterschiedliche Zustände des Eingriffs eines aus der Stütze ausfahrbaren Trag- und Schiebearms in das Hebeteil der Kupplungseinrichtung erkennbar sind,
Fig. 5 eine Ansicht des Lagersystems nach Fig. 1 in Verfahrrichtung der Palettenmagazine und der Portal-Beschickungseinrichtung, sowie eine Ausschnittvergrößerung der aus den Stützen ausfahrbaren Trag- und Schiebearme,
Fig. 6 eine Ansicht des Lagersystems ähnlich der Fig. 5, wobei jedoch der Trag- und Schiebearm in eine Langgutpalette eingreift um diese anzuheben,
Fig. 7 einen waagerechten Schnitt durch eine Stütze der Portalbeschickungseinrichtung mit ausschwenkbaren Trag- und Schiebearmen und
Fig. 8 ein Lagersystem mit einer Portal-Beschickungseinrichtung, bei dem jedoch die Palettenmagazine feststehend angeordnet sind.
Fig. 9 ein Lagersystem mit den Palettenmagazinen von oben mit Förderbahnen, die rechtwinklig zur Verfahrrichtung auf seinen beiden Seiten verlaufen,
Fig. 10 eine Ansicht eines Lagersystems mit mindestens einer Förderbahn zu einer Ausschleusungsstation entsprechend der Ansicht nach Fig. 5,
Figuren 11A und 11B eine Ausführungsform einer ausfahrbaren Tragarmplattform von oben bzw. von der Seite im eingezogenen Zustand und
Figuren 12A und 12B die Ausführungsform der ausfahrbaren Tragarmplattform im ausgefahrenen Zustand von oben bzw. von der Seite.

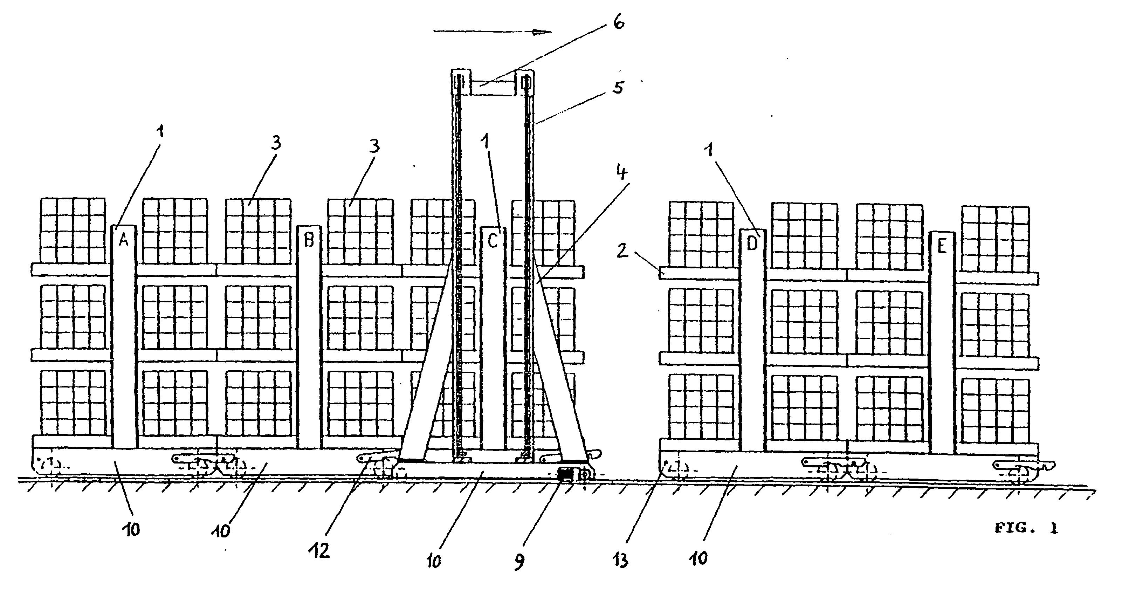

Das Lagersystem nach Fig. 1 weist mehrere verfahrbare Palettenmagazine 1 mit Fahrgestellen 10 auf. Jedes Palettenmagazin hat an seinen Stirnenden einen senkrechten Ständer. Die beiden Ständer sind miteinander verbunden. Von den Ständern ragen Paare waagerechter Auflagearme 2 weg, die in Verfahrrichtung verlaufen und jeweils in gleicher Höhe angeordnet sind. Dadurch entstehen pro Magazin mehrere Etagen von Lagerplätzen, die jeweils durch zwei Auflagearme gebildet sind. Die Fig. 1 zeigt mehrere Palettenmagazine 1, wobei in jedes der Palettenmagazine sechs Langgutpaletten 3 eingelagert sind. Die Palettenmagazine weisen Fahrgestelle 10 auf mit jeweils zwei parallel zu ihrer Breitseite verlaufenden Achsen, die jeweils zwei Laufräder halten. Die Laufräder laufen auf Schienen oder sie sind auch so ausgebildet, daß sie auf einer glatten Unterlage abrollen können. Die Fahrgestelle 10 jeweils zwei benachbarter Palettenmagazine 1 sind mit Hilfe der parallel zu ihren Stirnseiten angebrachten Kupplungseinrichtungen 12, 13 aneinander kuppelbar. Die Kupplungseinrichtungen bestehen jeweils aus einer Kupplungsklinke 12, die parallel zu einer Stirnseite eines Palettenmagazins befestigt ist und einem Kupplungsstift 13, der an der Stirnseite eines danebenliegenden Palettenmagazins befestigt ist.

Die Fig. 1 zeigt ferner eine Portal-Beschickungseinrichtung 4 mit senkrechten Stützen 5 und einem Portalarm 6, der die auf beiden Seiten der Portal-Beschickungseinrichtung 4 angeordneten Stützen 5 an ihren oberen Enden miteinander verbindet. Die Portal-Beschickungseinrichtung 4 ist in Verfahrrichtung der bewegbaren Palettenmagazine 1 mit Hilfe eines Verfahrantriebs 9 verfahrbar. Die Portal-Beschickungseinrichtung 4 weist schließlich ausfahrbare Trag- und Schiebearme auf, die zum Anheben der Langgutpaletten 3 sowie zum Verschieben der Palettenmagazine 1 dienen.

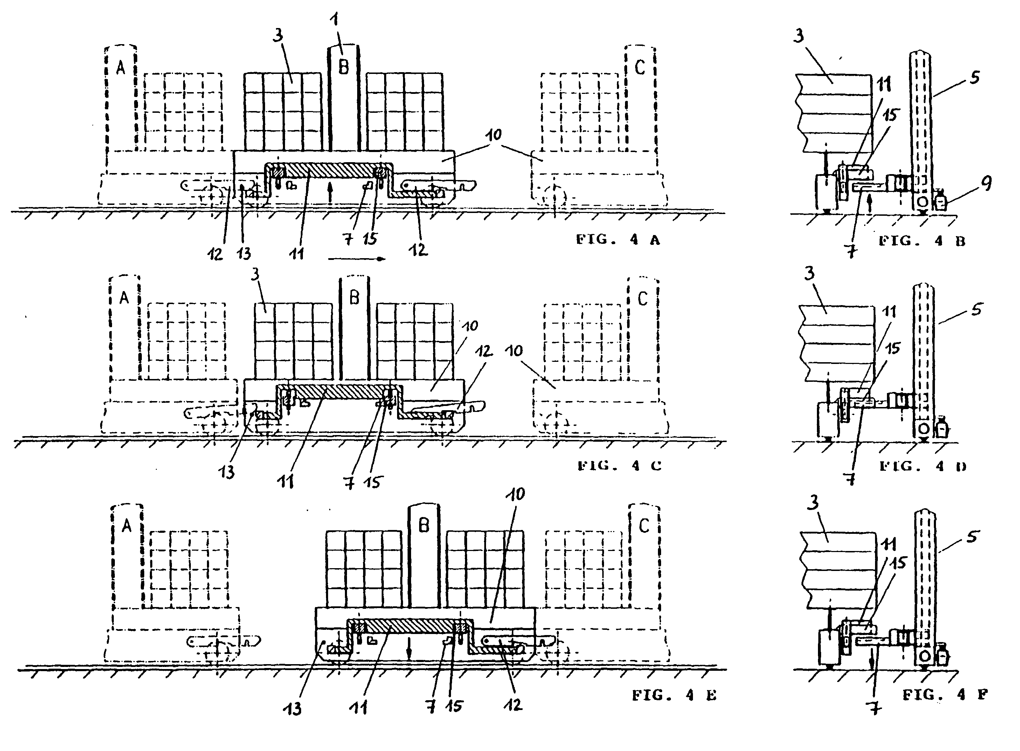

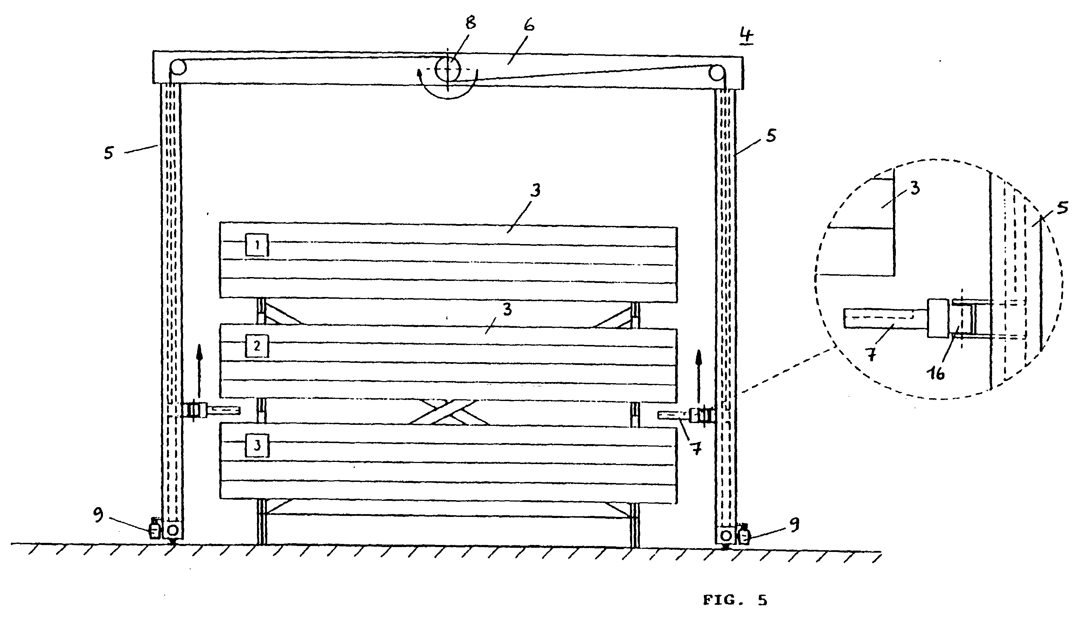

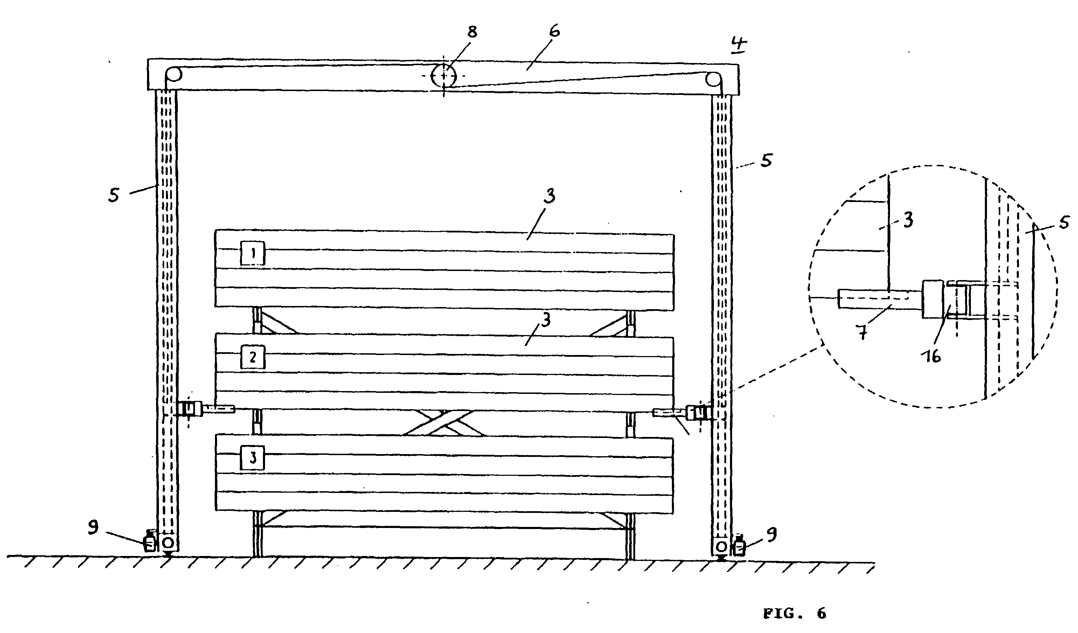

Die Einstellbarkeit der Trag- und Schiebearme 7 in der Höhe wird anhand der Figuren 4 und 5 zusammen mit Einzelheiten der Kupplungseinrichtungen sowie der Verschiebeeinrichtungen zum Verschieben der Palettenmagazine 1 beschrieben. Die Verwendung der Trag- und Schiebearme 7 zum Anheben von einzelnen Langgutpaletten 3 wird im folgenden anhand der Figuren 5 und 6 beschrieben.

Wie man aus Fig. 1 erkennt, sind die verfahrbaren Palettenmagazine 1 in einer Reihe unmittelbar aneinandergrenzend in zwei Gruppen angeordnet. Zwischen den beiden Gruppen befindet sich ein Beschickungsgang, der mindestens die Breite einer Langgutpalette 3 aufweist. Die Palettenmagazine 1 jeder Gruppe sind mit Hilfe der Kupplungseinrichtungen 12, 13 aneinander gekuppelt. Zum Entnehmen einer Langgutpalette 3 aus einem Fach eines Palettenmagazins 1 wird die Portal-Beschickungseinrichtung 4 so verfahren, daß sie die umzusetzende Langgutpalette 3 mit Hilfe ihrer Trag- und Schiebearme erfassen und anheben kann. Die Portal-Beschickungseinrichtung 4 wird dann seitlich verfahren, bis sich die betreffende Langgutpalette 3 im Beschickungsgang befindet. Dann wird die Langgutpalette 3 mit Hilfe der Trag- und Schiebearme angehoben, bis sie sich im oberen Bereich der Portal-Beschickungseinrichtung 4 befindet. Durch Verfahren der Portal-Beschickungseinrichtung 4 bis zu dem einen oder anderen Ende der Palettenmagazine kann die betreffende Langgutpalette an eine Ausgabestelle gebracht werden. Entsprechend können die Langgutpaletten 3, die neben dem dargestellten Beschickungsgang eingelagert sind, mit Hilfe der Portal-Beschickungseinrichtung an eine Ausgabestelle gebracht werden. Entsprechend können einzulagernde Langgutpaletten 3 als Magazinplätze neben dem dargestellten Beschickungsgang eingebracht werden.

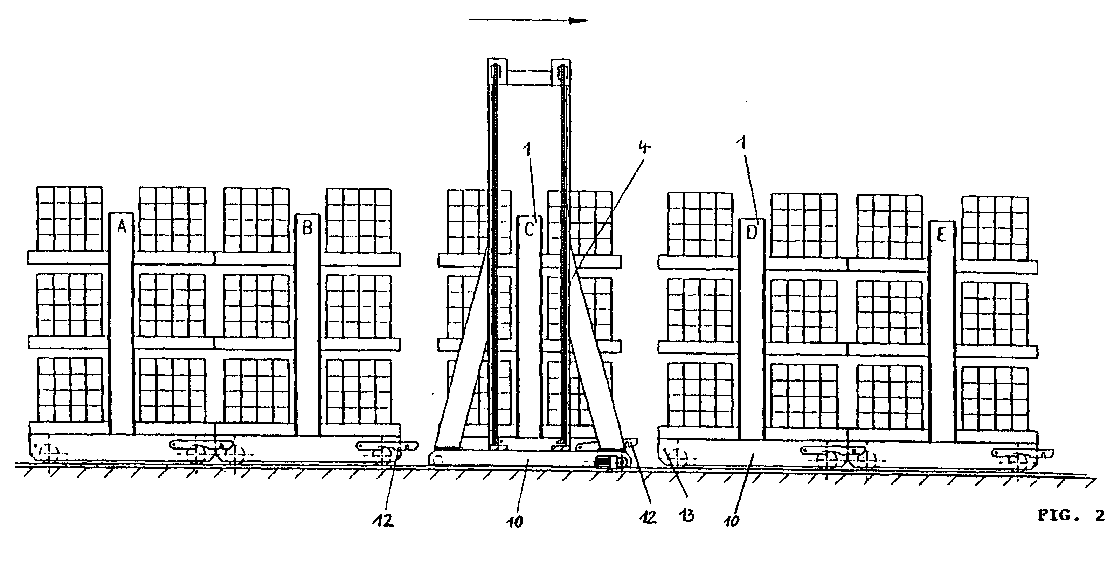

Falls ein Zugriff zu einer anderen Langgutpalette 3 erforderlich ist, die nicht neben dem dargestellten Beschickungsgang eingelagert ist, so wird die in den Figuren 1 bis 3 beispielshalber dargestellte Verschiebung eines Palettenmagazins 1 vorgenommen, um einen erforderlichen Beschickungsgang zu öffnen. Wie bereits weiter oben erwähnt und anhand der Figuren 4 und 5 noch im einzelnen ausgeführt, weist die Portal-Beschickungseinrichtung 4 Trag- und Schiebearme 7 auf, mit deren Hilfe die Kupplungseinrichtung 12, 13 an beiden Enden eines zu versetzenden Palettenmagazins 1 durch Anheben gelöst werden können. Die Trag- und Schiebearme 7 greifen in Schiebeteile des zu versetzenden Palettenmagazins 1 ein und mit Hilfe des Verfahrantriebs 9 der Portal-Beschickungseinrichtung 4 wird dann das entkuppelte Palettenmagazin 1 zur Bildung eines neuen Beschickungsgangs verfahren. In Fig. 2 ist erkennbar, wie das entkuppelte Palettenmagazin 1 gerade verfahren wird. Die Kupplungsteile bleiben in diesem Verfahrzustand entriegelt.

Sobald das verfahrene Palettenmagazin 1 das gegenüberliegende feststehende Palettenmagazin erreicht, werden die Trag- und Schiebearme abgesenkt und das versetzte Palettenmagazin wird in das danebenliegende Palettenmagazin durch Absenken der Trag- und Schiebearme eingekuppelt.

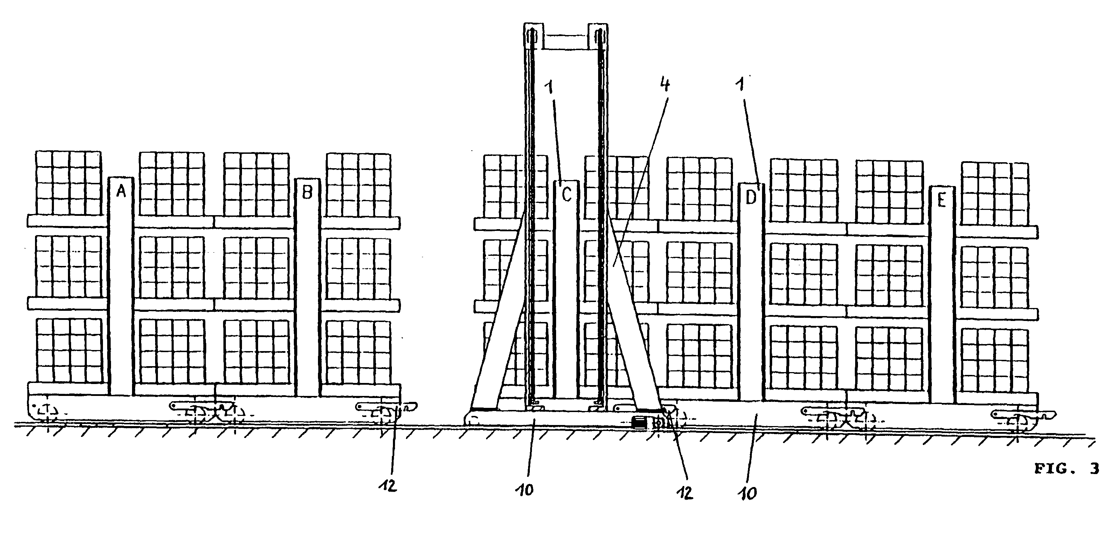

In den Figuren 4A bis 4F ist eine Ausführungsform für eine Kupplungseinrichtung zum Kuppeln von je zwei Palettenmagazinen aneinander in verschiedenen Arbeitsphasen dargestellt. Es ist dort ferner insbesondere in den Figuren 4A, 4C und 4E ein Hebeteil 11 erkennbar, das zum Entkuppeln dient. Die Darstellung von Kupplungseinrichtung 12, 13 und Hebeteil 11 nach Fig. 4A und 4B entspricht dem Ankopplungszustand nach Fig. 1, die Darstellung nach 4C und 4D dem Verfahrzustand nach Fig. 2 und die Darstellung nach Fig. 4E und 4F dem Ankopplungszustand nach Fig. 3.

Die Fig. 4A zeigt einen Schnitt in Längsrichtung durch das Hebeteil 11 sowie die Kupplungseinrichtung von der Seite. Jede Kupplungseinrichtung weist eine Kupplungsklinke 12 und einen Kupplungsstift 13 auf. In Fig. 4A ist die Kupplungsklinke 12 des zu verfahrenden Palettenmagazins 1 nicht eingeklinkt, während in den Kupplungsstift 13 auf der linken Seite dieses Palettenmagazins 1 die Kupplungsklinke des links angrenzenden Palettenmagazins eingreift. Das in Fig. 4A dargestellte Hebeteil 11 weist ein Auflagemittelteil und auf seiner linken und seiner rechten Seite ein Abhebeende auf, wobei das linke Abhebeende unter die Kupplungsklinke des linksangrenzenden Palettenmagazins und das rechte Abhebeende unter die Kupplungsklinke des betreffenden Palettenmagazins 1 ragt. Die aus den Stützen der Portal-Beschickungseinrichtung ausfahrbaren Trag- und Schiebearme 7, die gut in Fig. 4B erkennbar sind, und die Fig. 4A im Schnitt dargestellt sind, sind in eine Stellung unterhalb des Hebeteils 11 gebracht.

Zum Entkuppeln werden die Trag- und Schiebearme 7, wie es in den Figuren 4A und 4B durch einen senkrechten Pfeil dargestellt ist, angehoben. Beim Anheben der Trag- und Schiebearme 7 greifen diese in das Hebeteil 11 ein und heben dieses an, wie es in Fig. 4C und 4D dargestellt ist. Durch das Anheben des Hebeteils 11 werden mit Hilfe seiner auf beiden Seiten angeordneten Abhebeenden die Kupplungsklinken des betreffenden Palettenmagazins 1 sowie des links danebenliegenden Pa- lettenmagazins angehoben. Damit wird das betreffende Palettenmagazin 1 von dem links danebenliegenden Palettenmagazin entkuppelt.

Wie man gut anhand von Fig. 4C und 4D erkennt, wird durch das Anheben des Hebeteils 11 die Verschiebestange 15 frei, so daß je nach auszuführender Verschieberichtung für das Palettenmagazin ein Trag- und Schiebearm 7 in die danebenliegende Verschiebestange 15 eingreifen kann. Da die Kupplungsklinken 12 angehoben sind und damit das Palettenmagazin 1 entkuppelt ist, kann nun mit Hilfe des Trag- und Schiebearms 7 ein Verfahren des entkuppelten Palettenmagazins 1 in Richtung des waagerechten Pfeils der Fig. 4C ausgeführt werden. Die Tragund Schiebearme sind, wie man in den Fig. 4B, 4D und 4F erkennt, an der jeweiligen senkrechten Stütze 5 der Portal-Beschickungseinrichtung 4 angebracht, und bewegen das ausgekuppelte Palettenmagazin 1, wenn die Stütze über ihren Verfahrantrieb 9 verfahren wird.

Sobald das verfahrene Palettenmagazin 1 an das gegenüberliegende Palettenmagazin 1 anstößt, kann es in dieses dadurch eingekuppelt werden, daß das Hebeteil 7 durch Absenken des Trag- und Schiebearms 7, so wie es in Fig. 4E und 4F durch einen Pfeil dargestellt ist, abgesenkt wird. Dadurch wird die Kupplungsklinke 12 abgesenkt und rastet in den Kupplungsstift des nunmehr angrenzenden Palettenmagazins ein.

In der beschriebenen Weise läßt sich das Kuppeln und Verschieben der Palettenmagazine in einfacher Weise, zuverlässig und mit geringem Aufwand erreichen. Natürlich können auch mehrere Palettenmagazine gleichzeitig verschoben werden, wobei die Verschiebebewegung von dem letzten Palettenmagazin einer abgekuppelten Reihe von Palettenmagazinen durchgeführt wird.

Grundsätzlich besteht der Vorteil dieser wegschwenkbaren bzw. wegschiebbaren Trag- und Schiebeteile darin, daß günstige Voraussetzungen für Leer- und Positionierfahrten der Portalbeschickungseinrichtung gegeben sind. Bei den Leer- und Positionierfahnten kann die Portal-Beschickungseinrichtung jeweils auf kürzestem Weg die nächste Arbeitsposition anfahren.

In Fig. 5 sind ein Palettenmagazin 1 und die Portal-Beschikkungseinrichtung 4 in einer Ansicht in Verfahrrichtung dargestellt. Es sind die übereinander angeordneten Langgutpaletten 3 erkennbar, wie sie auf paarweise angeordneten Auflagearmen 2 des Palettenmagazins 1 aufliegen. Ferner sind die von jeder Stütze ausfahrbaren bzw. verschwenkbaren Trag- und Schiebearme 7 erkennbar, die über einen zentralen Hebe- und Senkantrieb 8 im Portalarm 6 über Seilzüge betätigbar sind. Die Verschwenkbarkeit der Trag- und Schiebearme 7 ist in Einzelheiten in einem vergrößerten Ausschnitt der Figur erkennbar, wobei die Schwenkbarkeit um eine senkrechte Achse eines Scharniers 16 erkennbar ist. Durch Steuerung des Aus- und Einschwenkens können elektromagnetische Vorrichtungen verwendet werden.

Fig. 6 zeigt eine entsprechende Ansicht wie Fig. 5, wobei jedoch die Trag- und Schiebearme 7 in eine, nämlich die mittlere Langgutpalette 3, von unten her eingreifen, um diese anzuheben. Natürlich sind an jeder Stütze zwei Trag- und Schiebearme 7 in gleicher Höhe vorgesehen.

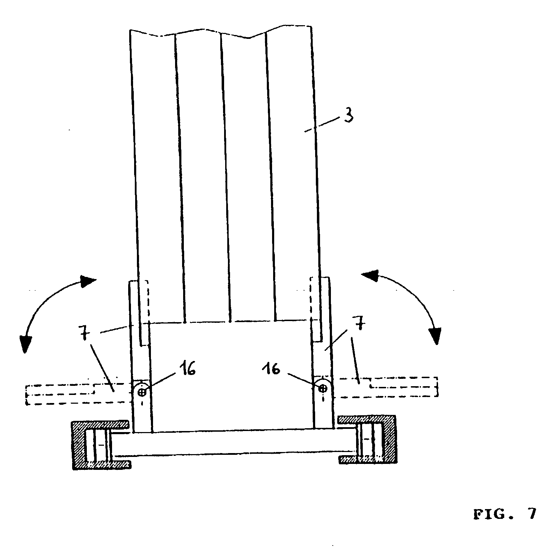

Die Fig. 7 zeigt in einem Schnitt die zwei paarweis vorgesehenen Trag- und Schiebearme 7. Durch Pfeile ist angegeben, wie jeder dieser beiden Trag- und Schiebearme 7 um 90° um ein Scharnier 16 schwenkbar ist. In der Stellung, in der beide Trag- und Schiebearme in entgegengesetzer Richtung ragen, ist ein Eingreifen in die Langgutpaletten bzw. in das Hebeteil für die Kupplungseinrichtung unmöglich und die Schiebearme können beliebig in der Höhe verfahren werden, um eine Ausgangshöhe für einen Anhebevorgang zu erreichen. In dieser Ausgangshöhe werden die Trag- und Schiebearme unter das anzuhebende Teil (Langgutpalette 3 oder Hebeteil 11) geschwenkt und dann zum Anheben nach oben verfahren.

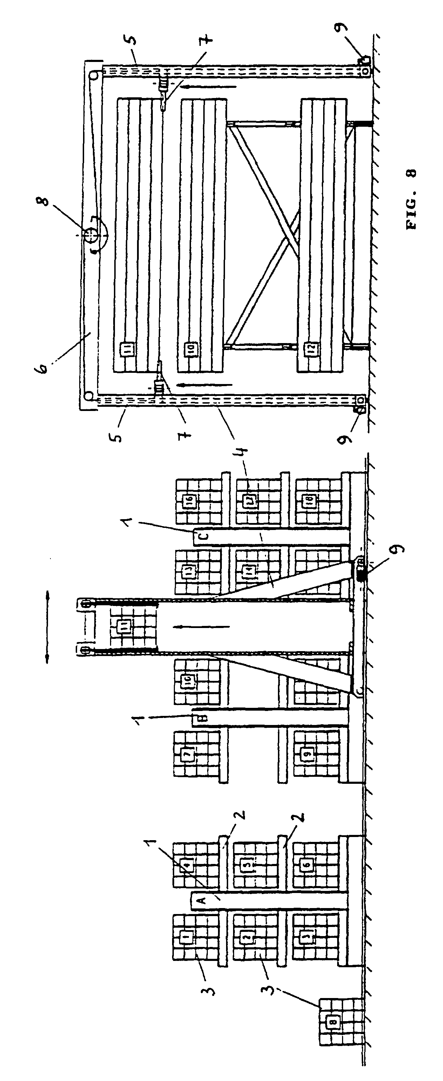

Fig. 8 zeigt eine andere Ausführungsform des Lagersystems, bei dem die Palettenmagazine 1 feststehend sind, und die Portal-Beschickungseinrichtung 4 an den Stirnseiten der Langgutpalette wie bei der zuerst beschriebenen Ausführungsform vorbei gefahren wird. Zwischen den einzelnen Palettenmagazinen 1 sind Beschickungsgänge vorgesehen, die so breit sind, daß sie eine Langgutpalette aufnehmen können. In dieser Anlage sind alle Langgutpaletten 3 direkt zugänglich und können mit Hilfe der Portal-Beschickungseinrichtung 4 durch Verfahren von deren Stützen und Absenken der Tragarme sowie Ausfahren aus den Stützen direkt erreicht werden. Wenn die Trag- und Schiebearme immer in ausgefahrener Stellung sind, ist auch bei dieser Anlage noch ein Zugriff zu den einzelnen Langgutpaletten möglich, durch Verfahren der Portal-Beschickungseinrichtung zu einem Beschickungsgang, Absenken der Trag- und Schiebearme auf die Höhe der auszulagernden Langgutpalette 3 und seitliches Nachfahren der Stützen der Portal-Beschickungseinrichtung 4, bis die Tragarme sich unter der auszulagernden Langgutpalette 3 befinden. Beim Ausheben werden dann entsprechende Verfahrwege durchgeführt. Der Platzbedarf dieses Lagersystems ist allerdings verhältnismäßig groß, d.h. etwa 1/3 größer als bei dem Lagersystem mit den verfahrbaren Palettenmagazinen 1.

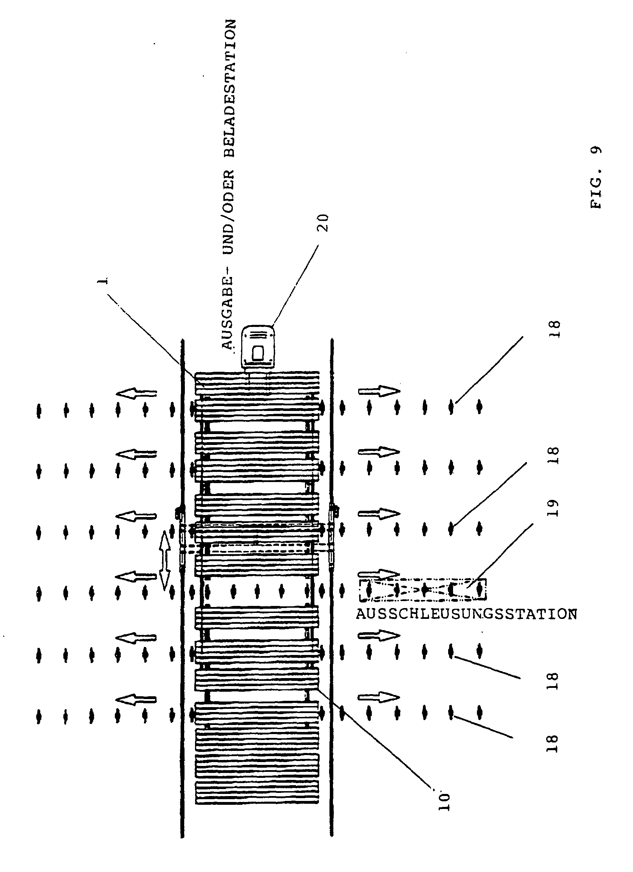

In Fig. 9 ist ein Lagersystem mit Langgutpaletten 3 von oben dargestellt, das in einer Richtung senkrecht zur Laufrichtung der Fahrgestelle 10, der Palettenmagazine 1 zwischen den Schienen sowie zu beiden Seiten der Schienen aus angetriebenen Walzenrollen 17 bestehende Lauf- oder Förderbahnen 18 in jeweils einem Abstand voneinander aufweist. Am Ende jeder Förderbahn 18 befindet sich eine Ausschleusungs- oder Ausgabestation 19. Die auszulagernden Langgutpaletten 3 werden auf eine ausgewählte Förderbahn 18 aufgesetzt und über diese der Ausschleusungs- oder Ausgabestation 19 auf der einen oder anderen Seite des Lagersystems gefördert. Die Ausschleusungs- oder Ausgabestationen 19 werden z. B. zum Entladen der Langgutpaletten 3 benutzt, um das auf den Langgutpaletten 3 gelagerte Langgut Bearbeitungseinrichtungen, z. B. Sägeeinrichtungen, Stanzvorrichtungen oder anderen Bearbeitungseinrichtungen zuzuführen. Nach der Bearbeitung können die bearbeiteten Langgutteile wieder zur Ausschleusungsoder Ausgabestation 19 zurückgeführt bzw. über diese eingeschleust und in das Lagersystem wiederum eingelagert werden.

Wenn mehrere derartige Ausschleusungs/Einschleusungs- oder Ausgabe/Eingabestationen 19 vorgesehen sind, lassen sich diese sehr flexibel einsetzen, da verschiedene Bearbeitungsschritte an dem gelagerten Gut durchgeführt werden können und eine Langgutpalette 3, sobald sie nicht mehr benötigt wird, dem Lagersystem wieder zuführbar ist. Volle bzw. leere Langgutpaletten 3 können über eine kopfseitige Ausgabe- und/oder Beladestation 20 geleert bzw. gefüllt werden.

Die angetriebenen Walzenrollen 17 sind zwischen den Fahrschienen für die Palettenmagazine und anschließend außen neben den Schienen so angeordnet, daß die Schienen beim Verfahren der einzelnen Palettenmagazine 1 überfahren werden. Die Laufflächen der durch die Walzenrollen 17 gebildeten Förderbahnen 18 liegen etwas höher als die Laufflächen der Schienen.

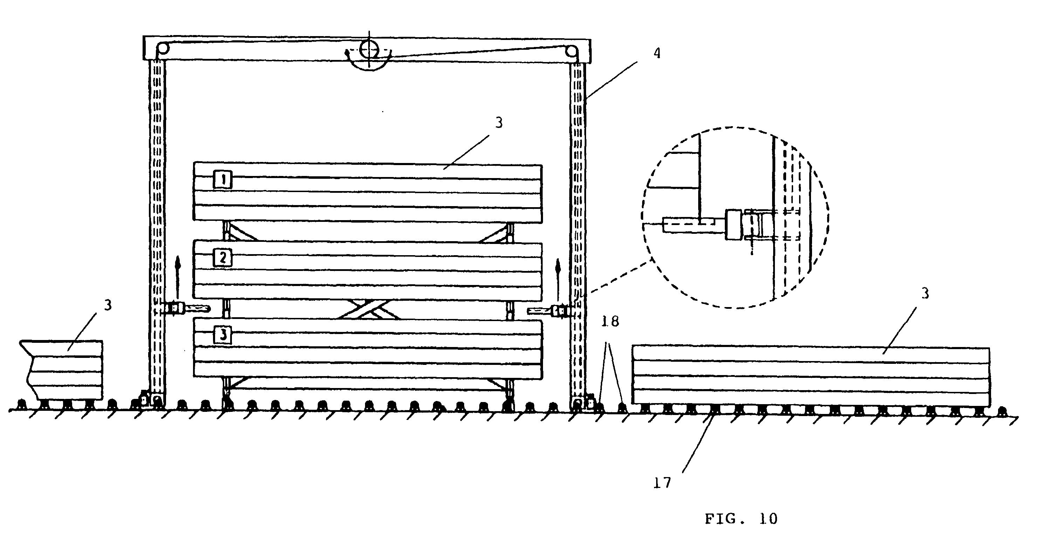

Fig. 10 zeigt die Vorrichtung nach Fig. 9 von der Seite, wobei die nebeneinander Walzenrollen 17 der Förderbahnen 18 zwischen den Schienen sowie auch seitlich neben den Schienen gut erkennbar sind. Damit die auf den Förderbahnen abgesetzten Langgutpaletten zu den Ausschleusungs- oder Ausgabestationen 19 gefördert werden können, muß die Portal-Beschickungseinrichtung 4, nachdem die betreffende Langgutpalette 3 auf einer ausgewählten Förderbahn abgesetzt ist, aus der Ebene, in der sich die betreffende Förderbahn 18 befindet, herausbewegt werden.

Bei Verwendung entsprechender Steuersysteme können notwendige Arbeitsgänge zum Ein- oder Auslagern sowie zur Bearbeitung vollautomatisch durchgeführt werden.

In besonders vorteilhafter Weise lassen sich Arbeitsschritte untereinander verbinden, wenn man die Portal-Beschickungseinrichtung die Palettenmagazine 1 verschieben kann, während sich die auszulagernde Langgutpalette 3 in der Überfahrposition der Portal-Beschickungseinrichtung 4 befindet. Zu diesem Zweck ist an der Portal-Beschickungseinrichtung 4 eine Vorrichtung beispielsweise ein zweiter Trag- und Schiebearm oder auch nur ein weiterer Schiebearm vorgesehen, der wahlweise in das zu verschiebende Palettenmagazin 1 eingreift. Dieser zweite Trag- und Schiebearm bzw. Schiebearm ist unterhalb des ersten Trag- und Schiebearms 7 an der Portal-Beschickungseinrichtung 4 angebracht.

Das Lagersystem für Langgutpaletten 3 ist in der Regel für bestimmte Breiten und Höhen der Langgutpaletten ausgelegt. Die Palettenmagazine können jedoch auch für unterschiedliche Palettenhöhen konzipiert sein. Geringe Mengen an Langgut können z. B. in flachen Paletten untergebracht sein. Bei gleichem Raumbedarf kann dadurch die Anzahl der Abstellpositionen erhöht werden.

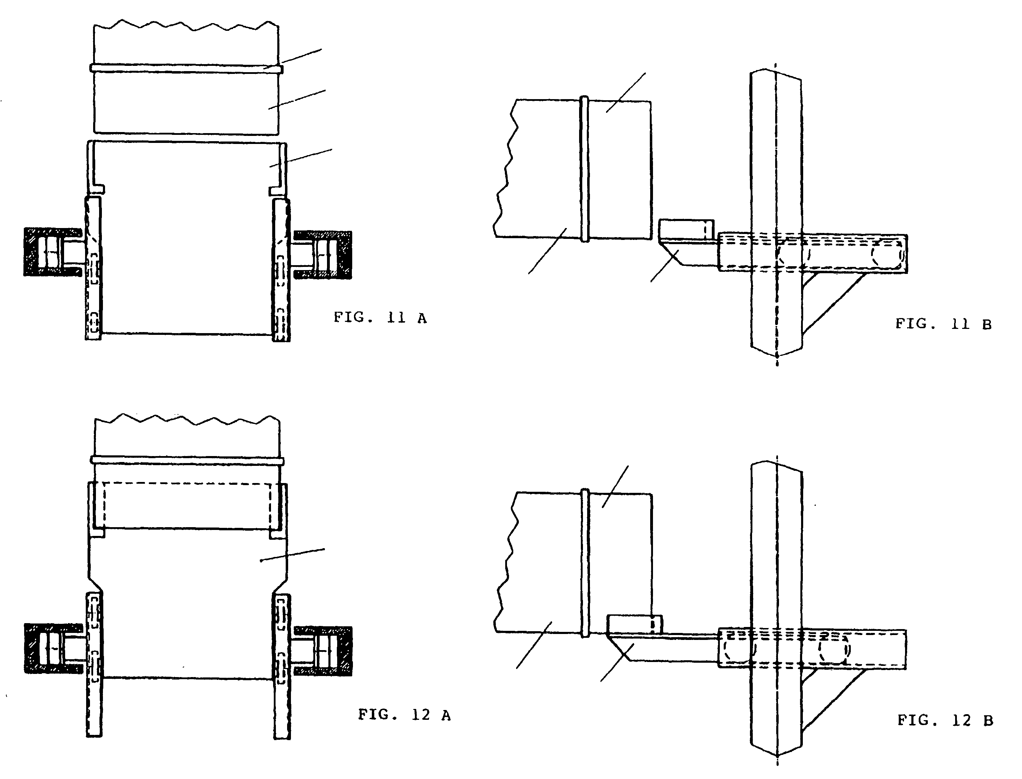

In den Figuren 11A und 11B sind Tragplattformen 21 von oben bzw. von der Seite dargestellt, auf die Bündel 22 aus selbsttragenden Profilen, z. B. Stahlprofilen, auflegbar sind. Derartige Bündel 21 und Pakete 22 werden in der Regel durch Umreifungen 23 zusammengehalten. Die Tragfunktion einer Palette ist in diesen Fällen nicht notwendig. Die Tragplattformen 21 sind ausfahrbar gestaltet. In den Figuren 11A und 11B ist eine Tragplattform im eingezogenen Zustand dargestellt, während sie in Fig. 12A und 12B im ausgefahrenen Zustand dargestellt ist.

## Patentansprüche

1. Lagersystem für Langgutpaletten mit zwei oder mehr Palettenmagazinen (1), in denen jeweils mindestens zwei Paletten (3) parallel übereinander absetzbar sind und mit einer Beschickungseinrichtung (4) zum Anheben und Absenken der Paletten und deren horizontaler Bewegung quer zu ihrer Längsrichtung, wobei die Beschickungseinrichtung als quer zur Längsrichtung der Langgutpaletten horizontal verfahrbare Portal-Beschickungseinrichtung (4) ausgebildet ist, deren Stützen (5) mit Hilfe einer Antriebsvorrichtung (9) an den Stirnseiten der Langgutpaletten vorbei verfahrbar sind und bei der die Palettenmagazine (1) quer zur Längsrichtung der Langgutpaletten (3) verfahrbar ausgebildet sind,
**dadurch gekennzeichnet,**
**daß** in den Stützen (5) der Beschickungseinrichtung (4) höhenverstellbare, ausfahrbare Tragteile (7) für die Langgutpaletten (3) vorgesehen sind.

2. Lagersystem für Langgutpaletten nach Anspruch 1,
**dadurch gekennzeichnet,**
**daß** die Palettenmagazine (1) mit Hilfe der Antriebsvorrichtung (9) für die Stützen (5) der Portal-Beschickungseinrichtung (4) verfahrbar sind und daß die höhenverstellbaren, ausfahrbaren Tragteile (7) in der Höhe synchron miteinander bewegbar sind.

3. Lagersystem nach Anspruch 1 oder 2,
**dadurch gekennzeichnet,**
**daß** die ausfahrbaren Tragteile (7) auch als Schiebeteile ausgebildet sind, und das die verfahrbaren Palettenmagazine (1) mit Hilfe der Portal-Beschickungseinrichtung (4) verschiebbar sind.

4. Lagersystem nach Anspruch 1, 2 oder 3,
**dadurch gekennzeichnet,**
**daß** die in den Stützen (5) vorgesehenen ausfahrbaren Trag- bzw. Trag- und Schiebeteile (7) über einen zentral angetriebenen Hebe- und Senkantrieb (8) in einem festen Portalarm (6) bewegbar sind.

5. Lagersystem nach Anspruch 3 oder 4,
**dadurch gekennzeichnet,**
**daß** die ausfahrbaren Trag- und Schiebeteile (7) als um eine senkrechte Achse schwenkbare
Schiebearme ausgebildet sind.

6. Lagersystem nach einem der Ansprüche 3 bis 5,
**dadurch gekennzeichnet,**
**daß** die ausfahrbaren Trag- und Schiebeteile (7) elektromagnetisch bewegbar sind.

7. Lagersystem nach einem der vorhergehenden Ansprüche,
**dadurch gekennzeichnet,**
**daß** jeweils zwei benachbarte verfahrbare Palettenmagazine (1) mit lösbaren Kupplungseinrichtungen (12,13) aneinander kuppelbar sind.

8. Lagersystem nach einem der vorhergehenden Ansprüche,
**dadurch gekennzeichnet,**
**daß** die verfahrbare Portal-Beschickungseinrichtung (4) derart ausgebildet ist, daß sie ein Anheben der Langgutpaletten (3) über die obersten der in den Palettenmagazinen lagerbaren Paletten gewährleistet.

9. Lagersystem nach Anspruch 7 oder 8,
**dadurch gekennzeichnet,**
**daß** die lösbaren Kupplungseinrichtungen (12, 13) eine nach oben schwenkbare Einrastklinke (12) aufweisen, die in waagerechter Stellung durch Eingreifen in einen Kupplungsstift (13) an dem benachbarten Palettenmagazin zwei aneinandergrenzender Palettenmagazine (1) koppelt und in nach oben geschwenkter Stellung der Kupplungseinrichtung (12,13) löst.

10. Lagersystem nach Anspruch 8,
**dadurch gekennzeichnet,**
**daß** die Einrastklinken (12) an beiden Stirnseiten der verfahrbaren Palettenmagazine (1) angeordnet sind.

11. Lagersystem nach Anspruch 9 oder 10,
**dadurch gekennzeichnet,**
**daß** jede der Einrastklinken (12) mit Hilfe eines nach oben verschiebbaren Hebeteils (11) anhebbar ist, das ebenfalls an der Stirnseite der Palette angeordnet ist.

12. Lagersystem nach Anspruch 11,
**dadurch gekennzeichnet,**
**daß** die Hebeteile (11) ein Auflagemittelteil und zwei Abhebeenden aufweisen, von denen das eine die Einrastklinke (12) des zugehörigen Palettenmagazins (1) und das andere Abhebeende das freie Ende der Einrastklinke (12) des benachbarten Palettenmagazins (1) anhebt.

13. Lagersystem nach Anspruch 12,
**dadurch gekennzeichnet,**
**daß** die Hebeteile (11) mit Hilfe der ausfahrbaren Tragarme (7) zum Lösen der Kupplungen anhebbar sind.

14. Lagersystem nach Anspruch 13 in Abhängigkeit von Anspruch 3,
**dadurch gekennzeichnet,**
**daß** an den Fahrgestellen (10) der Palettenmagazine (1) Verschiebestege (15) angebracht sind, in die die Trag- und Schiebeteile (7) bei angehobenem Hebeteil (11) zum Verfahren des Palettenmagazins (1) eingreifen.

15. Lagersystem nach Anspruch 1,
**dadurch gekennzeichnet,**
**daß** die Portal-Beschickungseinrichtung (4) einen höhenvestellbaren Tragarm für die Langgutpaletten (3) und eine getrennt angebrachte und getrennt steuerbare Verschiebevorrichtung aufweist.

16. Lagersystem nach Anspruch 15,
**dadurch gekennzeichnet,**
**daß** die Verschiebevorrichtung als ein an der Portal-Beschikkungseinrichtung (4) angebrachter Schiebearm ausgebildet ist.

17. Lagersystem nach einem der vorhergehenden Ansprüche,
**dadurch gekennzeichnet,**
**daß** sich zu beiden Seiten des Lagersystems in einer Richtung quer zur Laufrichtung der Fahrgestelle (10) sowie im Anschluß zwischen den Schienen eine oder mehrere Förderbahnen (18) befinden.

18. Lagersystem nach Anspruch 17,
**dadurch gekennzeichnet,**
**daß** die Förderbahnen (18) aus einer Folge von angetriebenen Walzenrollen (17) bestehen.

19. Lagersystem nach Anspruch 18,
**dadurch gekennzeichnet,**
**daß** die Förderbahnen jeweils mit einer Anschleusungs- oder Ausgabe- und/oder Einschleusungs- oder Eingabestation (19) enden.

20. Lagersystem nach einem der vorhergehenden Ansprüche, insbesondere nach Anspruch 8,
**dadurch gekennzeichnet,**
**daß** die Portal-Beschickungseinrichtung (4) eine höhenverstellbare ausfahrbare Tragplattform (21) zum Anheben von Bündeln von Langgut anstelle von Langgutpaletten aufweist.

## Claims

1. Storage system for pallets for long products, with two or more pallet magazines (1) in which in each case at least two pallets (3) can be stacked alongside and on top of one another, and with a loader (4) for raising and lowering the pallets and for moving them horizontally at right angles to their lengthwise direction, wherein the loader is in the form of a gantry loader (4) which can be moved horizontally at right angles to the lengthwise direction of the long-product pallets, the columns (5) of which gantry loader are capable of being moved along the front faces of the long-product pallets with the aid of a drive unit (9), and in which the pallet magazines (1) are made so that they can be moved at right angles to the lengthwise direction of the long-product pallets,
**characterised in that**
there are, in the columns (5) of the loader (4), height-adjustable, extendable lifter parts (7) for the long-product pallets (3).

2. Storage system for pallets for long products as in Claim 1,
**characterised in that**
the pallet magazines (1) can be moved with the aid of the drive unit (9) for the columns (5) of the gantry loader (4), and **in that** the height-adjustable, extendable lifter parts (7) can be moved simultaneously in a vertical direction.

3. Storage system as in Claim 1 or 2,
**characterised in that**
the extendable lifter parts (7) are also made as sliding parts, and **in that** the movable pallet magazines (1) can be pushed along with the aid of the gantry loader (4).

4. Storage system as in Claim 1, 2 or 3,
**characterised in that**
the extendable lifter or lifting / sliding parts (7) in the columns (5) can be moved by a centrally powered raising and lowering drive unit (8) in a fixed gantry arm (6).

5. Storage system as in Claim 3 or 4,
**characterised in that**
the extendable lifting / sliding parts (7) are made in the form of sliding arms which can be swivelled about a vertical axis.

6. Storage system as in one of Claims 3 to 5,
**characterised in that**
the extendable lifting / sliding parts (7) can be moved electromagnetically.

7. Storage system as in one of the preceding Claims,
**characterised in that**
in each case, two adjacent movable pallet magazines (1) can be linked to each other by means of separable couplings (12, 13).

8. Storage system as in one of the preceding Claims,
**characterised in that**
the movable gantry loader (4) is made in such a way that it ensures that the long-product pallets (3) are lifted above the uppermost pallets that can be stored in the pallet magazine.

9. Storage system as in Claim 7 or 8,
**characterised in that**
the separable couplings (12, 13) have a locking catch (12) that can be swivelled upwards which, in the horizontal position, links two adjoining pallet magazines (1) by engaging with a coupling pin (13) on the adjacent pallet magazine (1), and which, when swivelled upwards, releases the coupling (12, 13).

10. Storage system as in Claim 8,
**characterised in that**
the locking catches (12) are positioned on both front faces of the movable pallet magazines (1).

11. Storage system as in Claim 9 or 10,
**characterised in that**
each of the locking catches (12) can be raised with the aid of a lifting latch (11) which can be pushed upwards and which is likewise positioned on the
front face of the pallet.

12. Storage system as in Claim 11,
**characterised in that**
the lifting latches (11) have a central supporting part and two lifting ends, one of which raises the locking catch (12) of the relevant pallet magazine (1) and the other one of which raises the free end of the locking catch (12) of the adjacent pallet magazine (1).

13. Storage system as in Claim 12,
**characterised in that**
the lifting latches (11) can be raised with the aid of the extendable lifter arms (7) for the purpose of releasing the couplings.

14. Storage system as in Claim 13 in dependence on Claim 3,
**characterised in that**
slide bars (15) are attached to the undercarriages (10) of the pallet magazines (1), with which slide bars the lifting / sliding parts (7) engage when the lifting latch (11) is raised, for the purpose of moving the pallet magazine (1).

15. Storage system as in Claim 1,
**characterised in that**
the gantry loader (4) has a height-adjustable lifter arm for the long-product pallets (3) and a sliding device which is separately attached and which can be separately controlled.

16. Storage system as in Claim 15,
**characterised in that**
the sliding device is in the form of a sliding arm attached to the gantry loader (4).

17. Storage system as in one of the preceding Claims,
**characterised in that**
there are one or more conveyor tracks (18) on both sides of the storage system running in a direction which is at right angles to the direction of the
undercarriages (10), and in the connection between the rails.

18. Storage system as in Claim 17,
**characterised in that**
the conveyor tracks (18) are made up of a series of powered rollers (17).

19. Storage system as in Claim 18,
**characterised in that**
the conveyor tracks each terminate in an outward transfer or distributing station and/or an inward transfer or receiving station (19).

20. Storage system as in one of the preceding Claims, in particular as in Claim 8,
**characterised in that**
the gantry loader (4) has a height-adjustable, extendable lifting platform (21) for lifting bundles of long product instead of long-product pallets.

## Revendications

1. Système d'entreposage pour palettes pour objets longs avec deux chargeurs de palettes (1) ou plus, dans lesquels au moins deux palettes (3) peuvent à chaque fois être déposées l'une sur l'autre en parallèle l'une de l'autre, et avec un dispositif de chargement (4) pour lever et baisser les palettes dont le mouvement horizontal est transversal à la direction longitudinale des palettes, le dispositif de chargement étant conçu en tant que dispositif de chargement à portique (4) pouvant être déplacé horizontalement transversalement à la direction longitudinale des palettes pour objets longs, dont les appuis (5) peuvent passer devant les faces avant des palettes pour objets longs à l'aide d'un mécanisme de commande (9) et pour lequel les chargeurs de palettes (1) sont conçus de manière à pouvoir être déplacés transversalement à la direction longitudinale des palettes pour objets longs (3), **caractérisé en ce que** des pièces porteuses (7) amovibles et réglables en hauteur dans les appuis (5) du dispositif de chargement (4) sont prévues pour les palettes pour objets longs (3).

2. Système d'entreposage pour palettes pour objets longs selon la revendication 1, **caractérisé en ce que** les chargeurs de palettes (1) peuvent être déplacés à l'aide du mécanisme de commande (9) pour les appuis (5) du dispositif de chargement à portique (4) et **en ce que** les pièces porteuses (7) amovibles et réglables en hauteur peuvent être déplacées simultanément en hauteur.

3. Système d'entreposage selon la revendication 1 ou 2, **caractérisé en ce que** les pièces porteuses amovibles (7) peuvent également être conçues en tant que pièces coulissantes et **en ce que** les chargeurs de palettes (1) mobiles peuvent être déplacés à l'aide du dispositif de chargement à portique (4).

4. Système d'entreposage selon la revendication 1, 2 ou 3, **caractérisé en ce que** les pièces porteuses et/ou porteuses et coulissantes amovibles (7) prévues dans les appuis (5) peuvent être déplacées dans un bras de portique fixe (6) via une commande de levage et de descente (8) à commande centrale.

5. Système d'entreposage selon la revendication 3 ou 4, **caractérisé en ce que** les pièces porteuses et coulissantes amovibles (7) sont conçues en tant que bras coulissants pivotant autour d'un axe vertical.

6. Système d'entreposage selon l'une quelconque des revendications 3 à 5, **caractérisé en ce que** les pièces porteuses et coulissantes amovibles(7) peuvent être déplacées de manière électromagnétique.

7. Système d'entreposage selon l'une quelconque des revendications précédentes, **caractérisé en ce que** deux chargeurs de palettes mobiles (1) voisins peuvent à chaque fois être couplés l'un avec l'autre à l'aide de dispositifs de couplage amovibles (12, 13).

8. Système d'entreposage selon l'une quelconque des revendications précédentes, **caractérisé en ce que** le dispositif de chargement à portique mobile (4) est conçu de manière à pouvoir garantir un levage des palettes pour objets longs (3) au-dessus des palettes supérieures pouvant être entreposées dans les chargeurs de palettes.

9. Système d'entreposage selon la revendication 7 ou 8, **caractérisé en ce que** les dispositifs de couplage amovibles (12, 13) comportent un cliquet d'accrochage (12) pivotant vers le haut qui couple en position horizontale deux chargeurs de palettes (1) voisins par mise en prise dans une cheville de couplage (13) sur un chargeur de palettes voisin et qui les libère en position pivotée vers le haut du dispositif de couplage (12, 13).

10. Système d'entreposage selon la revendication 8, **caractérisé en ce que** les cliquets d'accrochage (12) sont disposés sur les deux faces avant des chargeurs de palettes mobiles (1).

11. Système d'entreposage selon la revendication 9 ou 10, **caractérisé en ce que** chacun des cliquets d'accrochage (12) peut être levé à l'aide d'une pièce de levage mobile (11) vers le haut qui est également disposée sur la face avant de la palette.

12. Système d'entreposage selon la revendication 11, **caractérisé en ce que** les pièces de levage (11) comportent une pièce intermédiaire d'appui et deux extrémités de levage dont l'une soulève le cliquet d'accrochage (12) du chargeur de palettes (1) correspondant et dont l'autre soulève l'extrémité libre du cliquet d'accrochage (12) du chargeur de palettes (1) voisin.

13. Système d'entreposage selon la revendication 12, **caractérisé en ce que** les pièces de levage (11) peuvent être levées à l'aide des bras porteurs amovibles (7) pour relâcher les couplages.

14. Système d'entreposage selon la revendication 13 en association avec la revendication 3, **caractérisé en ce que** des traverses de manoeuvre (15) dans lesquelles s'engrènent les pièces porteuses et coulissantes (7) pour déplacer le chargeur de palettes (1) lorsque la pièce de levage (11) est levée sont placées sur les chariots (10) des chargeurs de palettes (1).

15. Système d'entreposage selon la revendication 1, **caractérisé en ce que** le dispositif de chargement à portique (4) comporte un bras porteur réglable en hauteur pour les palettes pour objets longs (3) et un dispositif de déplacement réglable indépendamment et disposé individuellement.

16. Système d'entreposage selon la revendication 15, **caractérisé en ce que** le dispositif de déplacement est conçu en tant que bras coulissant disposé sur le dispositif de chargement à portique (4).

17. Système d'entreposage selon l'une quelconque des revendications précédentes, **caractérisé en ce qu'**une ou plusieurs bande(s) transporteuse(s) (18) se trouve(nt) des deux côtés du système d'entreposage transversalement à la direction de marche des chariots (10), et est/sont raccordée(s) entre les rails.

18. Système d'entreposage selon la revendication 17, **caractérisé en ce que** les bandes transporteuses (18) se composent d'une série de rouleaux cylindriques (17) entraînés.

19. Système d'entreposage selon la revendication 18, **caractérisé en ce que** les bandes transporteuses se terminent à chaque fois par un poste d'évacuation ou de sortie et/ou un poste d'introduction ou d'entrée (19).

20. Système d'entreposage selon l'une quelconque des revendications précédentes, notamment selon la revendication 8, **caractérisé en ce que** le dispositif de chargement à portique (4) comporte une plate-forme porteuse (21) amovible et réglable en hauteur pour lever des paquets d'objets longs à la place des palettes pour objets longs.
